(19) Europäisches Patentamt
European Patent Office
Office européen des brevets

(11) EP 2 536 783 B1

(12) # EUROPEAN PATENT SPECIFICATION

(45) Date of publication and mention of the grant of the patent:
**15.04.2015 Bulletin 2015/16**

(21) Application number: **11701768.1**

(22) Date of filing: **01.02.2011**

(51) Int Cl.:
***C08L 23/12*** *(2006.01)* ***C08L 23/10*** *(2006.01)*
***C08K 5/00*** *(2006.01)* ***C08K 5/3437*** *(2006.01)*
***C08K 5/098*** *(2006.01)* ***C08K 3/22*** *(2006.01)*
***C08K 3/26*** *(2006.01)* ***C08K 3/30*** *(2006.01)*
***C08K 3/00*** *(2006.01)*

(86) International application number:
**PCT/EP2011/000467**

(87) International publication number:
**WO 2011/101091 (25.08.2011 Gazette 2011/34)**

(54) **USE OF A STABILIZATION MIXTURE FOR THE PRODUCTION OF A POLYPROPYLENE COMPOSITION WITH IMPROVED LIFETIME AND AGEING PROPERTIES**

VERWENDUNG EINER STABILISIERUNGSZUSAMMENSETZUNG ZUR HERSTELLUNG VON EINER POLYPROPYLENZUSAMMENSETZUNG MIT VERBESSERTER LEBENSDAUER UND VERBESSERTEN ALTERUNGSEIGENSCHAFTEN

UTILISATION D'UN MÉLANGE STABILISANT POUR LA PRÉPARATION D'UNE COMPOSITION DE POLYPROPYLÈNE AVEC UNE DURÉE DE VIE ET DES PROPRIÉTÉS DE VIEILLISSEMENT AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2010 EP 10001679**

(43) Date of publication of application:
**26.12.2012 Bulletin 2012/52**

(73) Proprietor: **Borealis AG**
**1220 Vienna (AT)**

(72) Inventor: **RUEMER, Franz**
**4222 St. Georgen/Gusen (AT)**

(74) Representative: **Kador & Partner**
**Corneliusstraße 15**
**80469 München (DE)**

(56) References cited:
**EP-A1- 1 312 623** **EP-A1- 2 067 798**
**EP-A1- 2 083 042** **US-A1- 2006 167 141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 536 783 B1

## Description

The present invention relates to stabilized polypropylene compositions and to a process for producing such polypropylene compositions, an article made of a stabilized polypropylene composition, and a stabilization mixture for producing these compositions.

Polyolefin compositions are prone to degradation during processing and end use. Especially degradation occurs, when the material is exposed to certain environmental conditions such as high energy radiation (e.g. UV exposure), mechanical shear and high temperatures. Furthermore, chlorine containing water also has negative effects on the polymer when being transported in polypropylene pipes. For these reasons, the polymers have reduced lifetimes and ageing properties.

Degradation proceeds in radical mechanism, and will finally destroy the polymer properties. The polyolefins are going through an ageing process. Usually the initializing step of the degradation process is the loss of a hydrogen atom from the polymer chain. This polymer free radical (R*) can react with an oxygen ($O_2$) molecule to form a peroxy radical (ROO*) which will in turn abstract another hydrogen atom from another polymer chain to form a hydroperoxide (ROOH). The hydroperoxide can split into two new free radicals (RO*) and (*OH), which continue to propagate the reaction to other polyolefin molecules.

In polyolefins the attack from free radicals can result in chain scission. One way to interrupt this process is to add an antioxidant into the composition.

The published Japanese patent application JP 05-170932 discloses polypropylene pipes for water supply purposes. It is disclosed that by adding certain antioxidants to different kinds of polypropylene, the endurance time of these pipes can be increased.

WO 03/064511 discloses different types of antioxidants for increasing the lifetime of a polyolefin pipe which is in permanent contact with chlorinated water, namely an epoxidized fatty acid or ester thereof and/or an organotin compound.

However, there is still a need for polypropylene compositions which impart a prolonged lifetime and improved ageing properties and for articles made thereof.

Documents EP 2 083 042 and EP 2 067 798 relate to a beta-nucleated polypropylene composition containing inorganic pigments and an acid scavenger used for the preparation of pipes. They disclose however no white pigment and do not aim at improving the lifetime of the pipes.

Thus, it is the object of the present invention to provide a polyolefin having minimized degradation during processing and also during final use resulting in improved lifetime and ageing properties.

The present invention is based on the inventive finding that a polyolefin can be stabilized if the polyolefin composition comprises a pigment and an acid scavenger.

Therefore, the present invention provides the use of a stabilization mixture comprising a beta-nucleating agent, an acid scavenger and a white pigment for the production of a polypropylene composition having a time before failure within an oven test at 130°C of at least 1000 hours after storage in chlorinated water with a chlorine content of 8 ppm and at a temperature of 90°C for 5 weeks.

It has surprisingly been found that the stabilization by the combination of an acid scavenger and a pigment results in prolonged lifetime and improved ageing properties. Particularly, it has surprisingly been found that the combination of the pigment and the acid scavenger shows a synergistic stabilization effect on propylene homo or copolymers, particularly on propylene homo- or copolymers having a considerable amount of beta-crystallinity.

Usually pigments are avoided for all applications requiring oxidation stability as the resulting compositions which contain pigments are sometimes even more susceptible to photodegradation and are more difficult to stabilize against such photodegradation than the unpigmented polymers.

The polypropylene composition also has processability and mechanical properties necessary to fulfill the requirements for polymer pipes for fluid transport such as high pressure resistance in combination with good long term properties.

The combined stabilization by pigments and acid scavenger is particularly effective when the base resin has beta-crystallinity. Beta-nucleated propylene polymers are isotactic propylene polymers composed of chains in a $3_1$ helical conformation having an internal microstructure of beta-form spherulites being composed of radial array of parallel stacked lamellae. The presence of the beta-form can be detected through the use of Differential Scanning Calorimetry or Wide Angle X-Ray Scattering.

The base resin of the polypropylene composition according to the invention has an amount of beta-crystallinity determined by Differential Scanning Calorimetry of at least 80 %. More preferably the composition has an amount of beta-crystallinity of at least 85 %, still more preferably at least 90 %, most preferably at least 95 %.

Beta-polypropylene can be formed by the addition of beta-nucleating agents to the propylene melt and subsequent crystallization. The beta-crystallinity is preferably induced by a beta-nucleating agent according to either at least one quinacridone compound of formulas I to III

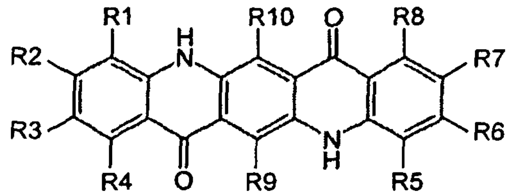

I

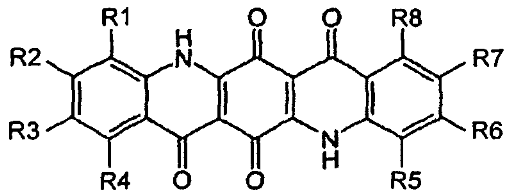

II

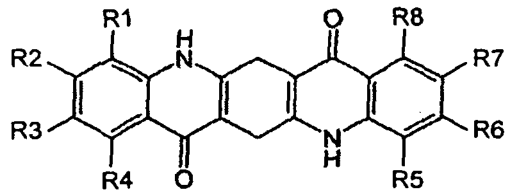

III

wherein R1, R2, R3, R4, R5, R6, R7, R8, R9 and R10 independently are H, alky, halogen, alkoxy or aryl; or at least one dicarboxylic acid salt of at least one earth alkali metal or a mixture thereof.

Preferably R1, R2, R3, R4, R5, R6, R7, R8, R9 and R10 independently are H, $CH_3$, Cl, methoxy or phenyl.

The more preferred quinacridone compounds of formula I are quinacridone, dimethylquinacridone and dimethoxyquinacridone. The more preferred quinacridone compounds of formula II are quinacridonequinone, a mixed crystal of 5,12-dihydro-quino(2,3b)acridine-7,14-dione with quino(2,3b)acridine-6,7,13,14-(5H, 12H)-tetrone as disclosed in EP-B0177961 and dimethoxyquinacridonequinone. The more preferred quinacridone compounds of formula III are dihydroquinacridone, dimethoxydihydroquinacridone and dibenzodihydroquinacridone.

The dicarboxylic acid salts of earth alkali metals more preferably are pimelic acid calcium salt and suberic acid calcium salt and mixtures thereof.

Mixtures of such nucleating agents may also be employed.

Most preferably, the beta-nucleating agent for inducing beta-crystallinity is cinquasia gold or pimelic acid calcium salt, usually cinquasia gold.

Further suitable types of beta-nucleating agents are:

dicarboxylic acid derivate type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids,

diamine derivate type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines,

amino acid derivate type diamide compounds from amidation reaction of $C_5$-$C_8$-alkyl-, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines,

salts of earth alkali metals and imido acids of the formula IV

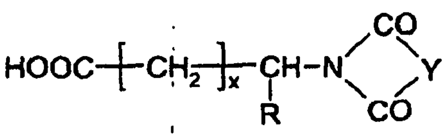

wherein x = 1 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cy-

cloalkyl or $C_6$-$C_{12}$-aryl - substituted bivalent $C_6$-$C_{12}$-aromatic residues, preferably calcium salts of phthaloylglycine, hexahydrophthaloylglycine, N- phthaloylalanine and/or N-4-methylphthaloylglycine.

The beta-nucleating agent can be provided in a master batch. The master batch preferably consists of the beta-nucleating agent, a polypropylene resin and a polyolefin wax.

An acid scavenger is a compound being capable of reacting with acid residues of Brønsted acids occurring under polymer formation.

The acid scavenger preferably is a metal oxide or a metal hydroxy carbonate or mixtures thereof.

Preferably, the acid scavenger is selected from the group of earth alkali and/or transition metal oxide, or earth alkali and/or boron group metal hydroxy carbonate or mixtures thereof. More preferably, the acid scavenger is an earth alkali metal oxide or magnesium-aluminum hydroxy carbonate or mixtures thereof. Still more preferably, the acid scavenger is magnesium oxide or hydrotalcite or mixtures thereof. Most preferably, the acid scavenger is magnesium oxide or synthetic hydrotalcite or mixtures thereof.

The acid scavenger is preferably present in an amount of 0.01 to 1 wt% with respect to the propylene composition. More preferably, the acid scavenger is present in an amount of 0.05 to 0.5 wt%, most preferably 0.05 to 0.2 wt%

It is to be understood that the amount of acid scavenger refers to the total amount of the respective compound irrespective of the capability of reacting with acid residues of Bronsted acids. For example when magnesium oxide is used as the acid scavenger the amount in the composition refers to the total of magnesium atoms irrespective of the capability of reacting with further acids.

The pigment preferably is a white pigment. A white pigment is a pigment having a refractive index of at least 1.8 when measured according to ASTM D542 using an Abbé refractometer.

Still more preferably the pigment is titanium dioxide (CAS No. 13463-67-7) in its natural form rutile (refracticve index 2.70), anatase (refractive index 2.44) or brookite, or a synthetic form such as monoclinic, tetragonal or orthorhombic, or a high pressure form such as the monoclinic baddeleyite-like form or an orthorhombic alpha-$PbO_2$-like form, or zinc sulfide or mixtures thereof. Most preferably, the pigment is titanium dioxide rutile form or zinc sulfide in its alpha-form (CAS No. 1314-98-3, refractive index 2.57).

The pigment is usually present in an amount of 0.1 to 3 wt% with respect to the propylene composition. More preferably the pigment is present in an amount of 0.2 to 1.5 wt%, still more preferably 0.3- 1 wt%, most preferably 0.4 to 0.7 wt%.

The white pigment can be provided in a master batch. The master batch preferably consists of the white pigment and polyethylene or white pigment and polypropylene.

The polypropylene composition of the present invention preferably has an MFR of 0.05 to 40 g/10min at 230°C/2.16 kg, more preferably of 0.05 to 15 g/10min at 230°C/2.16 kg, more preferably 0.1 to 8 g/10min at 230°C/2.16 kg, most preferably 0.2 to 5 g/10min at 230°C/2.16 kg.

Furthermore, the polypropylene composition of this invention preferably has a density of between 900 to 940 $kg/m^3$.

The base resin preferably is a propylene copolymer being a copolymer formed from propylene and at least one comonomer selected from ethene and/or alpha-olefins.

Preferably, the base resin is a propylene copolymer, whereby the comonomer of the propylene copolymer forming the base resin is at least one alpha-olefin selected from $C_2$, $C_4$-$C_{18}$ alpha-olefins. Preferably, the base resin comprises 0.1 to 10 wt% of comonomer.

It is to be understood that the amount of comonomer refers to the total amount of comonomer in the base resin irrespective of the number of different comonomers that are used.

The propylene copolymer forming the base resin can be a propylene random copolymer or a propylene block copolymer, preferably a propylene random copolymer.

In the first embodiment, when the base resin is a propylene block polymer forming the base resin, the propylene block polymer preferably comprises 0.1 to 10 wt% of comonomer. The propylene block copolymer more preferably comprises 3 to 9 wt%, most preferably 7 to 9 wt% of comonomer. The comonomer of the propylene block copolymer is preferably at least one $C_2$, $C_4$-$C_8$ alpha-olefin. More preferably the comonomer is selected from ethene, 1-butene, 1-pentene, 1-hexene, 4-methyl-1-pentene and 1-octene. Particularly preferred is ethene.

In the second and preferred embodiment, the base resin is a propylene random copolymer. In this embodiment, the propylene random copolymer comprises 1 to 7 wt% of comonomer, more preferably comprises 2 to 6 wt%, most preferably comprises 3 to 5 wt% of comonomer.

The comonomer of the propylene random copolymer is preferably at least one $C_2$, $C_4$-$C_8$ alpha-olefin, more preferably the comonomer is selected from ethene, 1-butene, 1-pentene, 1-hexene, 4-methyl-1-pentene and 1-octene. Particularly preferred is ethene. The comonomer content is preferably form about 2 wt% to 10 wt%, more preferably from about 3 wt% to 7 wt%, and most preferably from about 3.5 wt% to 4 wt%.

The propylene homo- or copolymer used in this invention may be produced by single- or multistage process

polymerization of propylene or propylene and alpha-olefins and/or ethene such as bulk polymerization, gas phase polymerization, slurry polymerization, solution polymerization or combinations thereof using conventional catalysts. A homo- or copolymer can be made either in loop reactors or in a combination of loop and gas phase reactors. Those processes are well known to one skilled in the art.

A suitable catalyst for the polymerization of the propylene polymer is any stereospecific catalyst for propylene polymerization which is capable of polymerizing and copolymerizing propylene and comonomers at a temperature of 40 to 110 °C and at a pressure from 10 to 100 bar. Ziegler Natta catalysts as well as metallocene catalysts are suitable catalysts.

The polypropylene compositions obtained by the present invention may additionally also contain additives in up to 20 wt% with respect to the total composition.

In this case, the polypropylene composition of the present invention consists of

i. a base resin, consisting of at least one propylene homo- or copolymer;
ii. an acid scavenger;
iii. a pigment; and
iv. additives in an amount of up to 20 wt% with respect to the total composition.

An additive within this invention shall denote any compound selected from the group of further polymeric compounds, further pigments with refractive indices below 1.8, when measured according to ASTM D542 using an Abbé refractometer (i.e. non-white pigments), such as phthalocyanin, stabilizers such as antioxidants, metal deactivators and UV stabilizers, fillers such as clay, talc, mica, calcium carbonate, glass spheres, wollastonite, wood flour and barium sulfide, processing aids, antistatic agents and metal salts of organic acids.

Preferably, the amount of additives is up to 10 wt% with respect to the total composition.

Furthermore, it is preferred that the amount of further pigments with refractive indices below 1.8 when measured according to ASTM D542 using an Abbé refractometer (i.e. non-white pigments) is up to 2 wt%, more preferably up to 1 wt%, most preferably 0.4 wt% with respect to the total composition.

Typically, the composition contains for instance 0.01 to 2.5 wt% stabilizers and/or 0.01 to 1 wt% metal salts of organic acids as component (iv) with respect to the total composition.

Typical stabilizers are antioxidants, metal deactivators and UV-stabilizers. Typical UV-stabilizers are UV absorbers and hindered amine light stabilizers.

Preferably, the additive component (iv) includes at least one antioxidant. Preferred antioxidants are sterically hindered phenols or phosphorus-based antioxidants or mixtures thereof. Most preferred sterically hindered phenols are Pentaerythrityl-tetrakis(3-(3,5-di-tert. butyl-4-hydroxyphenyl)-propionate (Irganox 1010) [CAS-No. 6683-19-8] and 1,3,5-Trimethyl-2,4,6-tris-(3,5-di-tert. butyl-4-hydroxy-phenyl) benzene (Irganox 1330) [CAS-No. 1709-70-2]. Most preferred phosphorus-based antioxidant is Tris(2,4-di-*t*-butylphenyl)phosphite (Irgafos 168) [CAS-no. 31570-04-4]

The antioxidant is preferably present in an amount of 0.05 to 1.5 wt% with respect to the propylene composition.

Preferably, the additive component (iv) includes at least one metal salt of an organic acid. Preferably, the metal salt of an organic acid is selected from the group of alkali and/or earth alkali and/or transition metal salts of an organic acid. More preferably, the metal salt of an organic acid is selected from the group of alkali and/or earth alkali and/or transition metal stearate, or lactate. More preferably, the metal salt of an organic acid is selected from the group of calcium stearate, sodium stearate, zinc stearate or calcium dilactate. Most preferred is calcium stearate.

The metal salt of an organic acid is preferably present in an amount of 0.01 to 0.1 wt% with respect to the polymer composition.

The lifetime of the stabilized polypropylene compositions according to the present invention is measured by ageing tests, namely oven ageing and oxidation induction time (OIT) test, after storage in chlorinated water.

The oven ageing test and the OIT test are accelerated ageing tests that are used to predict the long term stability of polymers. Thus, the tests are a qualitative assessment of the level or degree of stabilization of the material tested. The tests can be used as a sensitive control measure to monitor the stabilization level in formulated resins.

One of the most important environmental stresses seen by polymers is high temperature exposure in the presence of air, also known as thermaloxidative degradation. For oven ageing, high temperatures are used so that failures occur in a reasonable length of time. The OIT test is designed to accelerate the thermal-oxidative degradation and therefore the test requires the presence of oxygen at elevated temperatures. The test method outlines a procedure for the determination of oxidation induction time (OIT) of polymeric materials by differential scanning calorimetry (DSC).

The polypropylene composition according to the invention preferably has an oxidation induction time (OIT), determined according to the international standard ISO 11357-6:2002(E)), at 210 °C of at least 5 minutes, after storage in chlorinated water with a chlorine content of 8 ppm, and a temperature of 90 °C for 5 weeks. More preferably, the OIT at 210 °C after storage in chlorinated water is 10 minutes, still more preferably 15 minutes and most preferably up to 30 minutes. In contrast, non stabilized polypropylene compositions have an OIT at 210 °C after storage in chlorinated water

of most usually up to 3 minutes. Thus, the polypropylene compositions of the present invention have an increased OIT at 210 °C compared to non stabilized polypropylene compositions after storage in chlorinated water.

For determining the oxidation induction time according to the international standard ISO 11357-6:2002(E)), the temperature profile is as follows. The compression molded test specimen is pre-equilibrated with nitrogen and then heated up with 20 °C/min up to 212 °C keeping it at this temperature for 5 min (isothermal equilibration), thereafter switching from nitrogen to oxygen. The gas flow for nitrogen and oxygen is at 50ml/min, when the measurement is performed on a DSC TA 2920 apparatus from TA Instruments.

The compression molded test specimens are prepared as described in section 6 (c) of the international standard ISO 11357-6: 2002 (E), whereby the dimension is adjusted to 50 mm x 10 mm x 2 mm. The weight of the test samples typically is in the range of 13-16 mg.

Furthermore, the polypropylene composition according to the invention preferably has a time to failure, determined according to the ISO standard ISO 4577-1983:E-8-2, within an oven test at 130 °C of at least 1000 hours after storage in chlorinated water with a chlorine content of 8 ppm and a temperature of 90 °C for 5 weeks when being determined on compression molded test specimens having dimension 50 mm x 10 mm x 1 mm being prepared according to ISO1873/2. The time to failure is determined by visual inspection (Figures 1 and 2) of the deterioration of the test specimen surface (dimensions of test specimen 50 mm x 10 mm x 1 mm). More preferably, the time before failure within the oven test at 130 °C after storage in chlorinated water is 2000 hours, still more preferably 3000 hours and most preferably up to 5000 hours. In contrast, non stabilized polypropylene compositions have a time before failure in an oven test at 130 °C after storage in chlorinated water of usually up to 180 hours. Thus, the polypropylene compositions of the present invention have an increased time before failure within an oven test at 130 °C compared to non stabilized polypropylene compositions after storage in chlorinated water.

The propylene composition is preferably prepared by melt mixing (e.g. hot cylinder mixing, twin screw extrusion) the base resin with components comprising beta-nucleating agents, acid scavengers and pigments at temperatures from 175 to 250 °C. The polypropylene composition is then extruded through one or more circular dies and either pelletized immediately by underwater pelletizing or solidified as one or more strands and pelletized.

A preferred application for the polypropylene composition obtained by the use of the present invention is the manufacture of pipes with increased lifetime for the transportation of chlorine-containing water. Thus, preferably an article is a pipe. The composition obtained by the present invention is also suitable for extrusion-, injection- or compression moulding.

The term "pipe" as used herein is meant to encompass pipes in a broader sense, including supplementary parts like fittings, valves and all parts which are commonly necessary for e.g. a water piping system. Pipes also encompass single and multilayer pipes, where for example one or more of the layers is a metal layer and pipes, which may include an adhesive layer. Other constructions of pipes, e.g. corrugated pipes, double wall pipes with or without hollow sections, are possible as well.

Pipes are produced by first plasticizing the propylene polymer composition in an extruder at temperatures in the range of from 200 to 250 °C and then extruding it through an annular die and cooling it. The extruders for producing the pipes can be single screw extruders with an L/D of 20 to 40 or twin screw extruders or extruder cascades of homogenizing extruders (single screw or twin screw). Optionally a melt pump and/or a static mixer can be used additionally between the extruder and the ring die head. Ring shaped dies with diameters ranging from approximately 16 to 2000 mm and even greater are possible. The melt arriving from the extruder is first distributed over an angular cross section via conically arranged holes and then fed to the core/die combination via a coil distributer or screen. If necessary, restrictor rings or other structural elements for ensuring uniform melt flow may additionally be installed before the die outlet. After leaving the annular die, the pipe is taken of over a calibrating mandrel, usually accompanied by cooling of the pipe by air cooling and/or water cooling, optionally also with inner water cooling. Preferred ways of producing pipes from β-nucleated polypropylene are disclosed in EP-A-1 887 934.

Fittings and valves are produced by injection molding. Injection molding machines with injection zones are used which have three-zone screws with a screw length of 18 to 24 D. Preferred mass temperatures for the melt are 240 to 270°C and temperatures for the injection mold are 220 to 250°C.

## Measurement methods:

### Melt flow rate

Melt flow rate is measured according to ISO 1133, at 230°C and 2.16 kg load ($MFR_{2.16kg/230°C}$) for polypropylene and is indicated in g/10 min. The MFR is an indication of the flowability, and hence the processability, of the polymer. The higher the melt flow rate, the lower the viscosity of the polymer.

**Comonomer content**

The comonomer content (weight percent) is determined in a known manner based on FTIR measurements, calibrated with $C_{13}$-NMR.

**Density**

The density is measured according to ISO 1183 on compression moulded specimens prepared in accordance with ISO 1873-2.

Beta-crystallinity

The presence of the beta-form is determined by Differential Scanning Calorimetry (DSC). DSC was run according to ISO 3146 / part 3 / method C2 with a scan rate of 10 °/min. The amount of beta-modification was calculated from the second heat by the following formula:

$$\text{beta-area} / (\text{alpha-area} + \text{beta-area})$$

"Second heat" means that the sample is heated according to ISO 3146 / part 3 / method C2 for a first time and then cooled to room temperature at a rate of 20 °C/min. The sample is then heated a second time, also according to ISO 3146 / part 3 / method C2. This second heat is relevant for measurement and calculation.

During the first heat all thermal history of the sample giving rise to different crystalline structure, which typically comes from different processing conditions and/or methods, is destroyed. Using the second heat for determination of beta-crystallinity, it is possible to compare samples regardless of the way the samples were originally manufactured.

**Refractive index**

The refractive index of pigments is measured according to ASTM D542 using an Abbé refractometer at 25°C.

**Lifetime properties**

The lifetime properties of the polypropylene compositions can be tested by two different lifetime measurements. Therefore, the polypropylene compositions were stored in chlorinated water wherein the average chlorine level was 8 ppm at an average temperature of 90°C for 5 weeks. Afterwards the time before failure / oxygen induction time of the compositions was measured according to:

**Determination of Thermal oxidative stability in Air -Oven Method**

International Standard ISO 4577-1983 (E) being incorporated by reference herewith - Apparatus used: VTU 60/60 from Vötsch.

**Determination of the Oxidation Induction Time with Differential Scanning Calorimetry**

International Standard ISO 11357-6:2002(E) being incorporated by reference herewith

**Examples**

Base resin:

The base resin used is a propylene-ethylene random copolymer with an $MFR_{2.16kg/230°C}$ of 0.25 g/10 min, an ethene content of 3.5 wt% and a density of 0.905 $g/cm^3$ which is commercially available by Borealis Technology Oy.

Compositions:

For all examples the base resin was mixed with 0.07 wt% calcium stearate, 0.1 wt% Irgafos 168, 0.2 wt% Irganox 1010 and 0.5 wt% Irganox 1330.

Furthermore, the compounds shown in table 1 were also added and the resulting mixtures were pelletized in a conventional twin screw compounding line for preparation of comparative examples 1 to 3 (CE1-CE3) as well as for the preparation of inventive examples 1 and 2 (IE1 & IE2). The values are given in weight percent.

The comparative examples CE1 and CE2 all contain white pigments, either zinc sulfide or titanium dioxide but no beta-nucleating agent and no acid scavenger.

The comparative example CE3 contains the acid scavenger synthetic hydrotalcite and the beta-nucleating agent Cinquasia Gold provided in a masterbatch (MB) but no white pigment. The Cinquasia Gold masterbatch (CQ MB) consists of 0.25 wt% Cinquasia Gold (Quinachidrone - CAS-no. 1503-48-6), 70 wt% of commercial polypropylene resin from Borealis (HD120MO - CAS-no. 9003-07-0), and 29.75 wt% of a polyolefin wax CAS-no. 25085-53-4. Thus, the final concentration of the beta nucleating agent cinquasia gold in the composition is 50 ppm.

The inventive examples IE1 and IE2 contain the beta-nucleating agent Cinquasia Gold provided in the master batch (CQ MB) an acid scavenger and the white pigment zinc sulfide provided in a masterbatch (zinc sulfide MB). The zinc sulfide masterbatch consists of 75 wt% zinc sulfide - CAS-no. 1314-98-3 having a refractive index of 2.57, and 25 wt% polyethylene - CAS-no. 9002-88-4. Thus the final concentration of zinc sulfide in the inventive examples IE1 and IE2 as well as the comparative examples CE1- CE3 is 0.5 wt%. More particularly, the inventive composition of IE1 contains the acid scavenger synthetic hydrotalcite, the inventive composition of IE2 contains the acid scavenger magnesium oxide.

Irgafos 168 is Tris(2,4-di-t-butylphenyl)phosphite. (CAS-no. 31570-04-4)

Irganox 1010 is Pentaerythrityl-tetrakis(3-(3,5-di-tert. butyl-4-hydroxyphenyl)-propionate. (CAS-no. 6683-19-8)

Irganox 1330 is 1,3,5-Trimethyl-2,4,6-tris-(3,5-di-tert. butyl-4-hydroxyphenyl) benzene. (CAS-no. 1709-70-2)

Synthetic hydrotalcite is $Mg_{4,5}$ $Al_2$ $(OH)_{13}$ $(CO_3)$ 3,5$H_2O$ (synthetic magnesium-aluminum hydroxycarbonate). (CAS-no. 11097-59-9) Pigment Blue 15:3 (Copper Phthalocyanine Blue)- (CAS-no. 147-14-8)

Table 1:

| | | CE1 | CE2 | CE3 | IE1 | IE2 |
|---|---|---|---|---|---|---|
| Pigment | Zinc sulfide | 0.5 | | | | |
| | Zinc sulfide MB | | | | 0.7 | 0.7 |
| | Titanium-dioxide | | 0.5 | | | |
| Additional pigment | Pigment Blue 15:3 | 0.1 | 0.1 | | | |
| Acid scavenger | Synthetic hydrotalcite | | | 0.1 | 0.1 | |
| | Magnesium oxide | | | | | 0.1 |
| Beta nucleating agent | CQ MB* | | | 2 | 2 | 2 |
| *Cinquasia Gold Master Batch | | | | | | |

The times before failure of test specimens made from polypropylene compositions according to the examples after storage in chlorinated water as described above are shown in table 2.

Table 2:

| | CE1 | CE2 | CE3 | IE1 | IE2 |
|---|---|---|---|---|---|
| OIT [min] | 3 | 2 | 16 | 27 | 16 |
| % | 18.8% | 12.5% | 100% | 168.8 | 100% |
| Oventest [hrs] | 178 | 178 | 3408 | 4920 | 4440 |
| % | 5.2% | 5.2% | 100% | 144.4% | 130.3% |

The comparative examples 1 and 2 show the lifetime before failure of a polypropylene composition comprising a pigment.

The polypropylene compositions of examples 3 to 5 show an increased time before failure after storage in chlorinated water in both tests. More particularly, the composition of comparative example 3 comprising a beta-nucleating agent and an acid scavenger shows a prolonged time before failure in both tests compared to a polypropylene composition comprising a pigment.

Further a polypropylene composition according to inventive examples 4 and 5 comprising beta-nucleated polypropylene, an acid scavenger and a pigment shows an even more prolonged time before failure than the other two compositions.

That result shows that the combination of beta-nucleating agents, acid scavengers and white pigments in a propylene composition according to the present invention increases the lifetime of propylene polymers. Thus, the stabilizing mixture comprising a beta-nucleating agent, an acid scavenger and a pigment shows a synergistic effect on the lifetime of a polypropylene composition.

## Claims

1. Use of a stabilization mixture comprising a beta-nucleating agent, an acid scavenger and a white pigment for the production of a polypropylene composition having a time before failure within an oven test at 130 °C of at least 1000 hours after storage in chlorinated water with a chlorine content of 8 ppm and a temperature of 90 °C for 5 weeks according to ISO 4577-1983: E-8-2,
whereby the polypropylene composition consists of

   (i) a base resin, consisting of at least one propylene homo- or copolymer whereby the base resin has an amount of beta-crystallinity determined by Differential Scanning Calorimetry of at least 80% according to ISO 3146/part 3/method C2 with a scan rate of 10°/min;
   (ii) an acid scavenger;
   (iii) a white pigment; and
   (iv) additives in an amount of up to 20 wt% with respect to the total composition.

2. Use according to claim 1, wherein beta-crystallinity is induced by a beta-nucleating agent according to at least one quinacridone compound of formulas I to III,

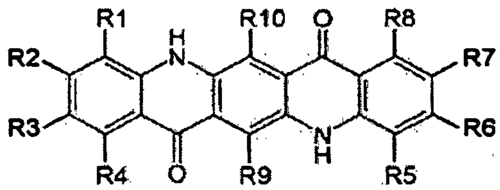
I

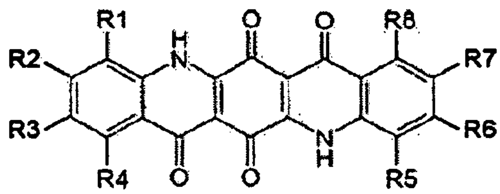
II

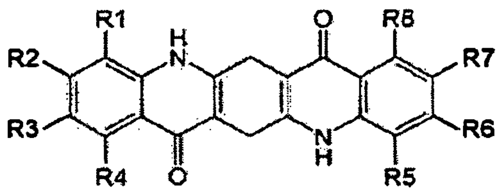
III

   wherein R1, R2, R3, R4, R5, R6, R7, R8, R9 and R10 independently are H, alkyl, halogen, alkoxy or aryl;
   or at least one dicarboxylic acid salt of at least one earth alkali metal or a mixture thereof.

3. Use according to claims 1 or 2, wherein the acid scavenger is a metal oxide or a metal hydroxy carbonate or mixtures thereof.

4. Use according to any one of the preceding claims, wherein the acid scavenger is present in an amount of 0.01 to 1.0 wt% with respect to the propylene composition

5. Use according to any one of the preceding claims, wherein the white pigment is present in an amount of 0.1 to 3 wt% with respect to the propylene composition.

6. Use according to any one of the preceding claims, wherein the polypropylene composition has an $MFR_{2.16kg/230°C}$ of 0.05 to 40 g/10min, measured according to ISO 1133.

7. Use according to any one of the preceding claims, wherein the base resin is a propylene copolymer, whereby the comonomer of the propylene copolymer forming the base resin is at least one alpha-olefin selected from $C_2$, and $C_4$-$C_{18}$ alpha-olefins.

8. Use according to claim 7, wherein the base resin comprises 0.1 to 10 wt% of comonomer.

9. Use according to claims 7 or 8, wherein the base resin is a propylene random copolymer.

10. Use according to any one of the preceding claims for the production of a composition having an oxidation induction time, determined according to ISO 11357-6:2002(E), at 210 °C of at least 5 minutes after storage in chlorinated water with a chlorine content of 8 ppm and a temperature of 90 °C for 5 weeks when being determined on a compression molded test specimen.

**Patentansprüche**

1. Verwendung eines Stabilisierungsgemisches, umfassend ein beta-Nukleierungsmittel, einen Säurefänger und ein Weißpigment, zur Herstellung einer Polypropylenzusammensetzung, die eine Zeitspanne bis zum Ausfall innerhalb eines Ofentests bei 130 °C von mindestens 1000 Stunden nach Lagerung in Chlorwasser mit einem Chlorgehalt von 8 ppm und einer Temperatur von 90 °C für 5 Wochen, gemäß ISO 4577-1983:E-8-2, aufweist, wobei die Polypropylenzusammensetzung aus

   (i) einem Basisharz, welches aus mindestens einem Propylen-Homo- oder Copolymer besteht, wobei das Basisharz eine Menge an beta-Kristallinität von mindestens 80%, bestimmt durch dynamische Differenzkalorimetrie gemäß ISO 3146 / part 3 / method C2 mit einer Scanrate von 10 °/min, aufweist;
   (ii) einem Säurefänger;
   (iii) einem Weißpigment; und
   (iv) Additiven in einer Menge von bis zu 20 Gew.-% bezogen auf die Gesamtzusammensetzung
   besteht.

2. Verwendung gemäß Anspruch 1, wobei die beta-Kristallinität durch ein beta-Nukleierungsmittel gemäß mindestens einer Chinacridon-Verbindung der Formeln (I) bis III,

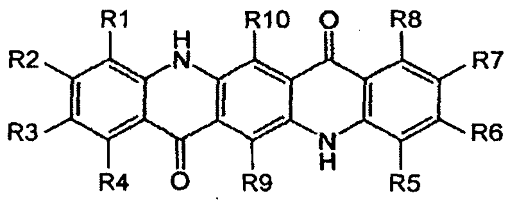

I

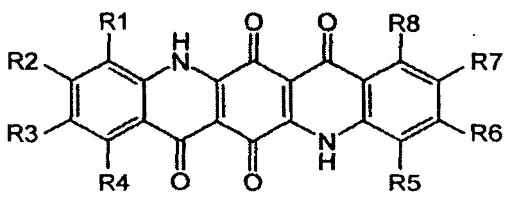

II

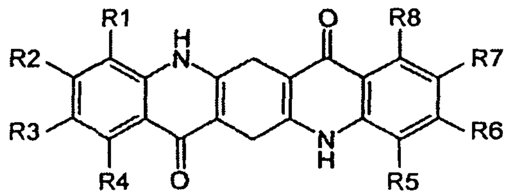

III

wobei R1, R2, R3, R4, R5, R6, R7, R8, R9 und R10 unabhängig voneinander H, Alkyl, Halogen, Alkoxy oder Aryl sind; oder durch mindestens ein Dicarbonsäuresalz mindestens eines Erdalkalimetalls oder einer Mischung davon, induziert wird.

3. Verwendung gemäß der Ansprüche 1 oder 2, wobei der Säurefänger ein Metalloxid oder ein Metallhydroxycarbonat oder Mischungen davon darstellt.

4. Verwendung gemäß einem der vorhergehenden Ansprüche, wobei der Säurefänger in einer Menge von 0,01 bis 1,0 Gew.-%, bezogen auf die Propylenzusammensetzung, vorliegt.

5. Verwendung gemäß einem der vorhergehenden Ansprüche, wobei das Weißpigment in einer Menge von 0,1 bis 3 Gew.-%, bezogen auf die Propylenzusammensetzung, vorliegt.

6. Verwendung gemäß einem der vorhergehenden Ansprüche, wobei die Polypropylenzusammensetzung eine $MFR_{2.16kg/230°C}$ von 0,05 bis 40 g/ 10 min, gemessen gemäß ISO 1133, aufweist.

7. Verwendung gemäß einem der vorhergehenden Ansprüche, wobei das Basisharz ein Propylen-Copolymer ist, wobei das Comonomer des Propylen-Copolymers, welches das Basisharz bildet, mindestens ein alpha-Olefin ausgewählt aus $C_2$ und $C_4$-$C_{18}$-alpha-Olefinen ist.

8. Verwendung gemäß Anspruch 7, wobei das Basisharz 0,1 bis 10 Gew.-% an Comonomer umfasst.

9. Verwendung gemäß den Ansprüchen 7 oder 8, ein Propylen-Random-Copolymer ist.

10. Verwendung gemäß einem der vorhergehenden Ansprüche zur Herstellung einer Zusammensetzung mit einer Oxidationsinduktionszeit bei 210 °C, bestimmt nach ISO 11357-6:2002(E), von mindestens 5 Minuten nach Lagerung in Chlorwasser mit einem Chlorgehalt von 8 ppm und einer Temperatur von 90 °C für 5 Wochen, wenn diese an einem formgepressten Prüfkörper bestimmt wird.

## Revendications

1. Utilisation d'un mélange de stabilisation comprenant un agent de bêta-nucléation, un fixateur d'acide et un pigment blanc pour la production d'une composition de polypropylène ayant un temps avant défaillance dans un test dans un four à 130 °C d'au moins 1 000 heures après stockage dans de l'eau chlorée avec une teneur en chlore de 8 ppm et une température de 90 °C pendant 5 semaines, selon la norme ISO 4577-1983 : E-8-2,
laquelle composition de polypropylène se compose de

   (i) une résine de base se composant d'au moins un homo- ou copolymère de propylène, laquelle résine de base a une quantité de bêta-cristallinité déterminée par analyse calorimétrique différentielle d'au moins 80 % selon la norme ISO 3146/ partie 3/méthode C2 avec une vitesse de balayage de 10°/min ;
   (ii) un fixateur d'acide ;
   (iii) un pigment blanc ; et
   (iv) des additifs en une quantité allant jusqu'à 20 % en poids par rapport à la composition totale.

2. Utilisation selon la revendication 1, dans laquelle la bêta-cristallinité est induite par un agent de bêta-nucléation selon le ou les composés de quinacridone de formules I à III,

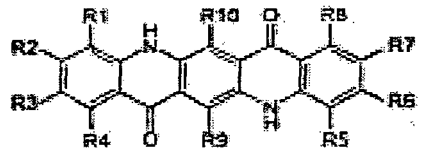

I

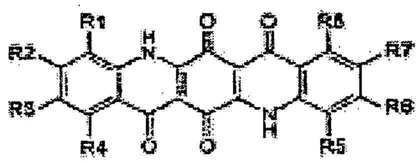

II

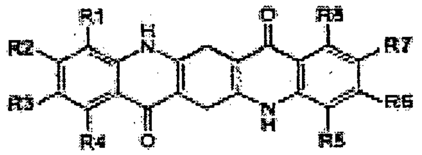

III

dans lesquelles R1, R2, R3, R4, R5, R6, R7, R8, R9 et R10 sont indépendamment H, un groupe alkyle, un atome d'halogène, un groupe alcoxy ou un groupe aryle ;
ou au moins un sel d'acide dicarboxylique d'au moins un métal alcalino-terreux ou un mélange de ceux-ci.

**3.** Utilisation selon la revendication 1 ou la revendication 2, dans laquelle le fixateur d'acide est un oxyde métallique ou un hydroxycarbonate métallique ou des mélanges de ceux-ci.

**4.** Utilisation selon l'une quelconque des revendications précédentes, dans laquelle le fixateur d'acide est présent en une quantité de 0,01 à 1,0 % en poids par rapport à la composition de propylène.

**5.** Utilisation selon l'une quelconque des revendications précédentes, dans laquelle le pigment blanc est présent en une quantité de 0,1 à 3 % en poids par rapport à la composition de propylène.

**6.** Utilisation selon l'une quelconque des revendications précédentes, dans laquelle la composition de polypropylène a un $MFR_{2,16\ kg/230\ °C}$ de 0,05 à 40 g/10 min., mesuré selon la norme ISO 1133.

**7.** Utilisation selon l'une quelconque des revendications précédentes, dans laquelle la résine de base est un copolymère de propylène, lequel comonomère du copolymère de propylène formant la résine de base est au moins une alpha-oléfine choisie parmi les alpha-oléfines en $C_2$ et $C_4$ à $C_{16}$.

**8.** Utilisation selon la revendication 7, dans laquelle la résine de base comprend de 0,1 à 10 % en poids de comonomère.

**9.** Utilisation selon la revendication 7 ou la revendication 8, dans laquelle la résine de base est un copolymère aléatoire de propylène.

**10.** Utilisation selon l'une quelconque des revendications précédentes pour la production d'une composition ayant un temps d'induction d'oxydation, déterminé selon la norme ISO 11357-6:2002(E) à 210 °C d'au moins 5 minutes après stockage dans de l'eau chlorée avec une teneur en chlore de 8 ppm et une température de 90 °C pendant 5 semaines, lorsqu'il est déterminé sur un échantillon de test moulé par compression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5170932 A
- WO 03064511 A
- EP 2083042 A
- EP 2067798 A
- EP 0177961 B
- EP 1887934 A